# EUROPÄISCHE PATENTANMELDUNG

(11) **EP 0 799 592 A1**
(43) Veröffentlichungstag der Anmeldung: **08.10.1997**
(21) Anmeldenummer: 97102926.9
(22) Anmeldetag: 22.02.1997
(51) Int. Cl.: A47J 31/44, A47J 31/54

(54) **Durchlauferhitzer für ein wassererhitzendes Haushaltsgerät**

(30) Priorität: 03.04.1996 DE 19613328
(71) Anmelder: Braun Aktiengesellschaft, Frankfurt am Main (DE)
(72) Erfinder: Werhahn, Friedrich, 97828 Marktheidenfeld (DE); Herz, Volker, 55422 Bacharach (DE); Eisenkolb, Erik, 60389 Frankfurt am Main (DE); Ziesch, Christian, 61169 Friedberg (DE)

(57) **Zusammenfassung**

Die Erfindung besteht aus einem Durchlauferhitzer für ein wassererhitzendes Haushaltsgerät, wie eine Kaffee-, Teemaschine oder ein Wasserkocher, mit einem U-förmigen Wasserrohr (1) mit Zu- (2) und Ablauf (3) an seinen freien Enden und mit einer mit dem Wasserrohr in Wärmekontakt stehenden und entlang diesem verlaufenden elektrischen Heizeinrichtung (4) mit elektrischen Anschlußstellen (6, 7). Ein am Durchlauferhitzer befestigter und mit diesem in Wärmekontakt stehender Temperaturregler (9) ist über elektrische Anschlußverbindungen (11, 12) einerseits mit dem einen Anschlußende (6) der Heizeinrichtung (4) und über einen Netzschalter (14) mit dem anderen Anschlußende (7) der Heizeinrichtung (4) verbunden. Andererseits ist der Durchlauferhitzer mit einer elektrischen Netzspannungsquelle verbindbar. Nach der Erfindung sind zumindest die elektrischen Anschlußverbindungen (12, 24), die zu dem Netzschalter (14) führen, durch selbsttragende Stromleiter gebildet, wobei der Netzschalter (14) auf der Krümmungsaußenseite des Wasserrohrs (1) freitragend durch die Stromleiter (12, 24) gehalten ist. Hierdurch wird die Montage des Durchlauferhitzers mit dem Netzschalter (14) und den Leitungen vereinfacht. Gleichzeitig werden flexible Drähte als elektrische Leitungen vermieden, was die Brandgefahr vermindert.

## Beschreibung

Die vorliegende Erfindung betrifft einen Durchlauferhitzer nach dem Oberbegriff des Anspruchs 1.

Ein derartiger Durchlauferhitzer ist aus der EP-A2 0 340 387 bekannt. Er bildet einen Teil einer Getränkezubereitungsmaschine, die insbesondere zur Zubereitung von Kaffee oder Tee verwendet wird. Der Durchlauferhitzer ist an einem Gerätesockel gehalten und kann über einen Netzschalter an der Außenseite eingeschaltet werden, um heißes Wasser über eine mit dem Wasserrohr des Durchlauferhitzers in Wärmekontakt stehende Heizeinrichtung zu erhitzen. Für die elektrische Versorgung des Durchlauferhitzers ist ein zentraler Träger unterhalb des Durchlauferhitzers quer durch den Gerätesockel verlaufend vorgesehen. An dem Träger, der aus einem isolierenden Werkstoff hergestellt ist, sind verschiedene aus Blech gestanzte Stromleiter gehalten, die unter anderem den Netzschalter mit dem Anschlußkabel verbinden. Weiterhin sind verschiedene flexible Anschlußkabel vorgesehen, die verschiedene Verbindungen zu und von einem Thermostat und einem Heizwiderstand, einem Netzschalter und der Anschlußstellen der elektrischen Heizeinrichtung herstellen.

Durch die Vorsehung des zentralen Trägers aus isolierendem Kunststoff gemäß der EP-A2 0 340 387, der verschiedene Stromleiter trägt, wird der Zusammenbau des Geräts wesentlich vereinfacht. Außerdem werden durch den Träger diese Stromleiter exakt geführt, so daß die durch diese Stromleiter nicht isoliert werden müssen, und dennoch keine Gefahr besteht, daß sie mit anderen Geräteteilen in Kontakt gelangen und einen Kurzschluß hervorrufen könnten. Es sind allerdings dennoch verschiedene flexible, stromleitende Kabel vorgesehen, wie dies vorstehend beschrieben ist, die mit entsprechenden Anschlußstellen der in dem Träger angeordneten Stromleiter verbunden werden müssen, entweder mittels einer Lötstelle oder über entsprechende Kabelschuhe und Anschlußfahnen. Solche elektrischen Kabel müssen sorgfältig bei der Montage des Durchlauferhitzers in dem Gerätesockel des Geräts verlegt werden, damit ein störungsfreier Betrieb des Geräts gewährleistet werden kann. Obwohl mit dem zentralen Träger der Zusammenbau erleichtert wird, erfordern die flexiblen Kabel noch eine wesentliche Handarbeit sowie eine jeweilige Prüfung der exakten Verlegung der Kabel. Gleichzeitig ist der Kunststoffträger aufwendig und teuer.

Ein weiteres Problem, das sich bei dem vorstehend erläuterten Durchlauferhitzer ergibt, ist dasjenige, daß der Durchlauferhitzer als vorgefertigtes Bauteil aus mehreren Komponenten besteht, die getrennt voneinander zu montieren sind, einschließlich der verschiedenen flexiblen Kabel.

Aufgabe der Erfindung ist es daher, einen Durchlauferhitzer für ein Wasser erhitzendes Haushaltsgerät, wie eine Kaffee-, Teemaschine oder einen Wasserkocher, zu schaffen, bei dem das Wasserrohr mit der elektrischen Heizeinrichtung einschließlich des Netzschalters und des Temperaturreglers sowie der elektrischen Anschlußverbindung als vorgefertigte, selbsttragende Einheit hergestellt werden kann, so daß diese Einheit mit möglichst wenig Bauteilen einen schnellen, aber dennoch betriebssicheren Einbau in das Gerät ermöglicht.

Diese Aufgabe wird durch die kennzeichnenden Merkmale des Anspruchs 1 gelöst. Ein wesentlicher Aspekt dieses Aufbaus des Durchlauferhitzers ist derjenige, daß der zentrale Befestigungspunkt, an dem der Netzschalter getragen wird, der Temperaturregler ist, so daß eine freitragende, in sich stabile Anordnung geschaffen wird. Für den Netzschalter ist in dem vorgefertigen Zustand des Durchlauferhitzers mit den elektrischen Verbindungen kein gesonderter Träger erforderlich, da der Netzschalter in seiner Position alleine durch den Stromleiter festgelegt ist, die zu dem Temperaturregler führt (führen). Erst im eingebauten Zustand des Durchlauferhitzers in einem Haushaltsgerät stützt sich sowohl das Wasserrohr mit der Heizeinrichtung wie der Netzschalter am Gehäuse des Gerätes fest ab. Weiterhin wird eine zusätzliche Stabilisierung der vorgefertigten Anordnung dadurch erreicht, daß ein weiterer Stromleiter von dem Netzschalter zu der einen Anschlußstelle der dem U-förmigen Wasserrohr zugeordneten Heizeinrichtung führt, die eine weitere Fixierung des Netzschalters in seiner Orientierung bildet. Bei der Montage wird das U-förmige Wasserrohr mit der elektrischen Heizeinrichtung in einem Gerätesockel befestigt und gleichzeitig kann der Netzschalter, über die Stromleiter, die ihn tragen, entsprechend ausgerichtet, in eine gehäuseseitige Führung und Halterung eingesetzt werden. Auf diese Art und Weise kann das Wasserrohr mit der elektrischen Heizeinrichtung und dem Netzschalter in einem Arbeitsschritt in das Gerät eingesetzt und befestigt werden. Darüberhinaus ist keine Verlegung von flexiblen Leitungen erforderlich, die von dem Netzschalter zu dem Temperaturregler führen, da hierzu eine oder mehrere entsprechende Stromleiter vorgesehen ist bzw. sind. Durch diese Anordnung können die Stromleiter auch äußerst kurz ausgebildet sein.

In einer bevorzugten Ausführungsform gemäß Anspruch 2 werden die Netzanschlußleitungen für Phase und Nulleiter in Form von selbsttragenden Stromleiter zu dem Netzschalter geführt. Die Stromzuführungsenden, d.h. die freien Anschlußenden dieser beiden Stromleiter, sollten bis etwa in den Bereich zwischen dem Zu- und dem Ablauf des Wasserrohrs hin geführt werden, so daß sie an einer Stelle in dem Gerät positioniert sind, das gut zugänglich ist, um diese Enden der Stromleiter mit den Netzanschlußkabeln zu verbinden. An diesen Stellen besteht keine Gefahr, daß das elektrische Netzanschlußkabel mit der elektrischen Heizeinrichtung in Berührung kommen könnte.

In Bezug auf eine solche Anordnung ist es weiterhin bevorzugt, daß, gemäß Anspruch 3, diese Netzanschluß-Stromleiter etwa in der Mitte des U-förmigen Wasserrohrs, insbesondere im Bereich der freien Enden des Wasserrohrs, verlaufen, so daß sie zu den beiden Enden des U-förmigen Wasserrohrs bzw. der damit in Verbindung stehenden elektrischen Heizeinrichtung einen ausreichenden Abstand haben. Der Netzschalter wird besonders gleichmäßig auf beiden Seiten getragen, wenn er zwischen den Stromleitern ausgebildet ist.

Die Netzanschluß-Stromleiter werden bevorzugt gemäß Anspruch 4 mit einem Abstand zu dem Wasserrohr und freitragend über dieses zu dem auf der Krümmungsaußenseite des Wasserrohrs liegenden Netzschalter hin geführt, so daß keine weiteren Befestigungsteile erforderlich sind.

Vorzugsweise werden, wie in Anspruch 5 angegeben ist, alle elektrischen Anschlußverbindungen als selbsttragende Stromleiter ausgebildet. Auf diese Art und Weise können alle elektrischen Anschlüsse, die zum einen zwischen dem elektrischen Netzanschlußkabel und dem Netzschalter und zum anderen zwischen dem Netzschalter und dem Temperaturregler benötigt werden, sowie Anschlußleitungen, die zu den Anschlußenden der elektrischen Heizeinrichtung hin erforderlich sind, als ein Stanzteil gebildet werden, das entsprechend profiliert wird. Im Stanzteil können die verschiedenen Stromleiter zunächst über schmale Metallstege zusammenhängend sein, die dann nach der Befestigung an dem Temperaturregler, an den Anschlußenden der elektrischen Heizeinrichtung und an den Kontaktstellen des Netzschalters durchtrennt werden, um die einzelnen Stromkreise voneinander zu entkoppeln.

Um die einzelnen Stromleiter gleichmäßig In dem durch das U-förmige Wasserrohr aufgespannten Raum verteilen zu können, wird gemäß Anspruch 6 der Netzschalter etwa in der Mitte der Krümmungsaußenseite des Wasserrohrs, an den zu dem Netzschalter führenden Stromleitern gehalten, positioniert.

In einer bevorzugten Ausführungsform gemäß Anspruch 7 wird der Temperaturregler mittels eines Trägers an dem Wasserrohr gehalten. Der sich von dem Temperaturregler zu dem Netzschalter erstreckende Stromleiter bildet die Haupthalterung für den Netzschalter, da dieser Stromleiter relativ kurz gehalten werden kann und dadurch relativ stabil ist.

Für eine räumliche Zuordnung des Temperaturreglers und des Netzschalters mit kurzem Abstand zueinander ist es zu bevorzugen, den Temperaturregler gemäß Anspruch 8 auf der Krümmungsinnenseite des Wasserrohrs anzuordnen. Falls der Netzschalter etwa in der Mitte der Krümmung des Wasserrohrs auf dessen Außenseite angeordnet ist, sollte der Temperaturregler seitlich zur Mittelachse versetzt werden, so daß der Bereich in der Mitte des U-förmigen Wasserrohrs frei verbleibt, um über diesen Bereich die bStromleiterzu führen.

In einer weiteren Ausführungsvariante der Thermostatregelung ist gemäß Anspruch 9 ein elektrischer Heizwiderstand vorgesehen, der üblicherweise dazu dient, den Thermostaten zu beheizen, um so öfters zu takten und damit die Heizleistung zu begrenzen. Hierdurch wird die Wärmezufuhr zu einer Warmhalteplatte des Geräts begrenzt und verhindert eine Überhitzung während der Warmhaltung des heißen Getränks in der Kanne auf der Warmhalteplatte. Diese Anordnung wird bei kleinen Mengen von Getränken benutzt.

Ein weiterer Stromleiter für die elektrische Verbindung von dem Widerstand zu dem Netzschalter schafft eine zusätzliche Halterung für den Netzschalter zusammen mit dem Stromleiter, die sich von dem Temperaturregler zu dem Netzschalter erstreckt. Nach Anspruch 10 verlaufen diese beiden Stromleiter, zusammen mit weiteren Stromleitern, wie beispielsweise diejenigen, die den Netzschalter mit dem Netzanschlußkabel verbinden, im Bereich der Außenseite des Wasserrohrs parallel zueinander und bevorzugt gemäß Anspruch 11 in einer Ebene liegend.

Gemäß Anspruch 12 sollten die Netzanschluß-Stromleiter in der durch das Wasserrohr aufgespannten Ebene liegend verlaufen, so daß dadurch eine geringe Bauhöhe erreicht werden kann.

Um eine zusätzliche Sicherheitseinrichtung zu schaffen, die dann zum Einsatz kommt, wenn der Temperaturregler ausfallen sollte, was zu einer unkontrollierten Temperaturerhöhung innerhalb des Geräts führen und die Betriebssicherheit gefährden würde, wird gemäß Anspruch 13 der eine und/oder der andere Stromleiter zwischen dem einen und/oder dem anderen Anschluß der elektrischen Heizeinrichtung, die sich jeweils zu dem Netzschalter oder dem Temperaturregler erstrecken, unter mechanischer Vorspannung zu der Anschlußstelle an der Heizeinrichtung hin stehend befestigt. Diese Befestigungsstelle, an der ein solcher Stromleiter befestigt ist, ist als Lötstelle ausgebildet. Aufgrund der mechanischen Vorspannung, mit der der Stromleiter zu dieser Lötstelle hin vorgespannt ist, bewegt sich beim Lösen der Lötstelle der Stromleiter von dem Anschlußpunkt weg, wodurch eine Unterbrechung der Stromleitung über diese Anschlußstelle bewirkt wird. Das Lösen der Lötstelle tritt dann auf, wenn eine Überhitzung vorliegt, die ein Erweichen des Lots der Lötstelle bewirkt.

Gleichzeitig kann gemäß den Ansprüchen 14 bis 16 in einem solchen Stromleiter ein verformter Abschnitt vorgesehen werden, der federnd nachgiebig eine Abstandsänderung zwischen den zwei Anschlußstellen, zwischen denen sich der Stromleiter erstreckt, aufnehmen, so daß zum einen Fertigungstoleranzen, zum anderen eine Längenänderung des Wasserrohrs bzw. der elektrischen Heizeinrichtung unter Erwärmung kompensiert werden. Bevorzugt ist der Abschnitt U- oder halbkreisförmig oder aber W- oder zickzackförmig geformt.

Weitere Einzelheiten und Merkmale der Erfindung ergeben sich aus der nachfolgenden Beschreibung eines Ausführungsbeispiels anhand der Zeichnung. In der Zeichnung zeigt
- Fig. 1: eine perspektivische untere Ansicht eines erfindungsgemäßen Durchlauferhitzers von den freien Enden des Wasserrohrs aus gesehen und
- Fig. 2: den Durchlauferhitzer der Figur 1 in einer perspektivischen, seitlichen Ansicht.

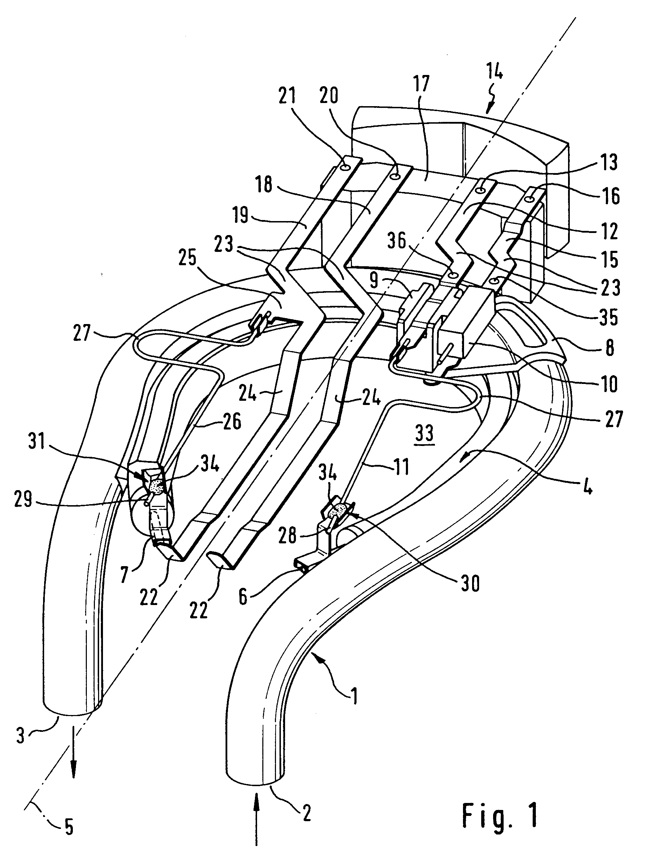

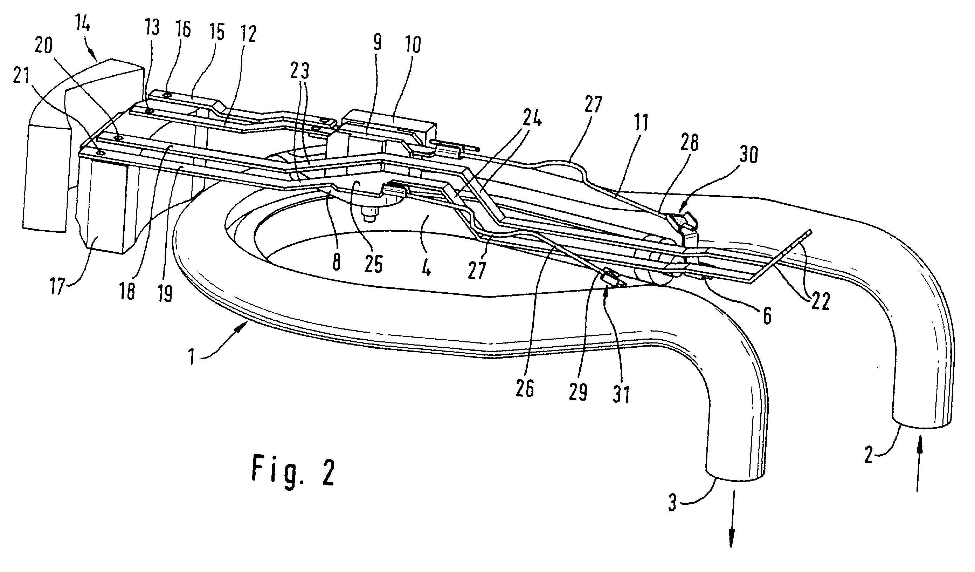

Der Durchlauferhitzer, wie er in den Figuren dargestellt ist, weist ein U-förmiges Wasserrohr 1 mit einem Zulauf 2 und einem Ablauf 3 auf. Der Zu- und Ablauf 2, 3 sind zu der Ebene, die durch den U-förmigen Teil des Wasserrohrs 1 gebildet wird, etwa in einem rechten Winkel abgewinkelt, wobei der Zulauf 2 in eingebautem Zustand des Durchlauferhitzers mit einem Wasservorratsbehälter (nicht dargestellt) verbunden wird, während der Ablauf 3 mit einer Steigleitung verbunden wird, um erhitztes Wasser zu einem mit Kaffeemehl füllbaren Brühraum (nicht dargestellt) zuzuführen. Der Durchlauferhitzer, wie er in den Figuren 1 und 2 dargestellt ist, wird also vor Einbau in einer Kaffeemaschine umgekehrt eingesetzt, damit der Zu- und Ablauf 2, 3 nach oben zeigen. An dem Innenumfang des Wasserrohrs 1 ist eine elektrische Heizeinrichtung 4 angeschweißt oder angelötet, die mit dem Wasserrohr 1 in sehr gutem Wärmekontakt steht. Die freien Anschlußenden 6, 7 der Heizeinrichtung 4 reichen bis etwa zu den Bereichen des U-förmigen Wasserrohrs 1, an denen der abgewinkelte Zulauf 2 und der abgewinkelte Ablauf 3 ansetzen.

Im hinteren Bereich des Wasserrohrs 1, seitlich zu der Mittelebene, durch die strichpunktierte Linie 5 in Figur 1 angedeutet, versetzt, ist an dem Wasserrohr 1 ein plattenförmiger Träger 8 befestigt, der einen Temperaturregler 9 sowie einen elektrischen Widerstand 10 in entsprechenden Halterungen trägt. Der Temperaturregler 9 ist zum einen über einen Metalldraht 11 mit dem einen Anschlußende 6 der elektrischen Heizeinrichtung 4 verbunden. Die Anschlußstelle 36 des Temperaturreglers 9 ist über einen Stromleiter 12 mit einer Anschlußstelle 13 eines Netzschalters 14, der an der Krümmungsaußenseite des mittleren Teils des Wasserrohrs 1 liegt, befestigt ist. Der elektrische Widerstand 10 ist zu dem Temperaturregler 9 parallel geschaltet, wobei die eine elektrische Verbindung durch einen weiteren Stromleiter 15, die, parallel zu dem Stromleiter 12 verlaufend, von der Anschlußstelle 35 zu dem Netzschalter 14 führt, hergestellt ist. Über diese beiden Stromleiter 12, 15, die aus flachem Bandmaterial gebildet sind und eine gewisse Eigensteifigkeit besitzen, wird der Netzschalter 14 frei am Durchlauferhitzer gehalten, allerdings wird er in seiner späteren Einbaustellung in einem Gerätegehäuse einer Kaffee- oder Teemaschine ausgerichtet und an seiner Schalterseite zusätzlich noch geführt.

Wie in Figur 1 zu erkennen ist, ist das Gehäuse 17 des Netzschalters 14 mittig zu der Mittellinie 5 orientiert. Während die beiden Stromleiter 12, 15 mit ihren Anschlußstellen 13, 16 auf der einen Seite des Gehäuses 17 befestigt sind, erstrecken sich symmetrisch zu der Mittellinie 5 zwei Netzanschluß-Stromleiter 18, 19, die an Anschlußstellen 20, 21 an dem Gehäuse 17 des Netzschalters 14 befestigt sind und die sich von dem Gehäuse 17 frei über das Wasserrohr 1 und über die elektrische Heizeinrichtung 4 bis etwa in die Mitte zwischen den freien Enden des Wasserrohrs 1 erstrecken. Diese beiden Stromleiter 18, 19 besitzen jeweils eine Anschlußfahne 22 an ihren freien Enden, an die Stromleiter (nicht dargestellt) eines von der Außenseite des Gerätegehäuses (nicht dargestellt) zugeführten Netzanschlußkabels, das ebenfalls nicht dargestellt ist, über entsprechende auf die Anschlußfahne 22 aufgesteckte Kontaktschuhe (nicht dargestellt) angeschlossen werden können.

Die Stromleiter 18 und 19 sind im Bereich des Innenraums 33, der durch das Wasserrohr 1 eingeschlossen wird, etwa beidseitig zu der Mittellinie 5 angeordnet. Es sind aber auch andere Verläufe möglich. Um die Stromleiter 12, 15, 18, 19, ausgehend von dem Netzschalter 14, zu ihren Anschlußstellen zu orientieren, schließen sich quer verlaufende Mittelabschnitte 23 an die Anschlußstellen 20, 21, 13, 16 an, die den Versatz vornehmen. Wie insbesondere in Figur 2 zu erkennen ist, liegen die hinteren 12, 15 und die vorderen 18, 19, mit dem Gehäuse 17 des Netzschalters 14 verbundenen Abschnitte der Stromleiter in einer Ebene und sind in ausreichendem Abstand über dem Wasserrohr 1 der elektrischen Heizeinrichtung 4 angeordnet. Um die Bauhöhe des Durchlauferhitzers gering zu halten, sind die freien Endabschnitte des Netzanschluß-Stromleiters 18, 19 in einer gemeinsamen Ebene liegend angeordnet, die zu der Ebene, die durch die Stromleiter 12, 15 aufgespannt ist, versetzt ist, wozu im Anschluß an die Mittelabschnitte 23 gemäß Figuren 1 und 2 schräg nach unten verlaufende Verbindungsabschnitte 24 vorgesehen sind.

Wie anhand der Figuren zu erkennen ist, wird der Netzanschluß-Stromleiter 18 durch das Gehäuse 17 des Netzschalters 14 frei getragen, während der Netzanschluß-Stromleiter 19 einerseits von dem Metalldraht 26 und andererseits von dem Netzschalter 14 getragen wird. Der Netzschalter 14 wiederum wird durch die beiden Stromleiter 12, 15 getragen, die an dem Temperaturregler 9 und dem elektrischen Widerstand 10, die ihrerseits an dem mit dem Wasserrohr 1 fest verbundenen Träger 8 befestigt sind, gehalten sind. Im Bereich des Mittelabschnitts 23 des äußeren Netzanschluß-Stromleiters 19 ist eine Anschlußplatte 25 ausgestanzt, an der ein weiterer Metalldraht 26 angeschlossen ist, der zu dem Anschlußende 7 der elektrischen Heizeinrichtung 4 führt.

Die Metalldrähte 11 und 26, die die Anschlußenden 6, 7 der elektrischen Heizeinrichtung 4 verbinden, weisen jeweils einen U-förmig gebogenen Biegeabschnitt 27 auf. Die vorderen Enden 28 und 29 der Metalldrähte 11 und 26 sind mit den jeweiligen Anschlußenden 6, 7 der elektrischen Heizeinrichtung 4 mit Lot 34 verbunden. Die Metalldrähte 11, 26 stehen unter einer mechanischen Vorspannung zu den entsprechenden Lötstellen 30, 31 der Anschlußenden 6, 7. Diese Verspannung wird dadurch hervorgerufen, daß während der Befestigung der nach oben gerichteten Enden (nicht dargestellt) diese Enden der Metalldrähte 11 und 26 auf die jeweiligen Lötstellen 30, 31 gegen eine Vorspannung niedergedrückt werden und so unter Spannung stehend an den Lötstellen 30 und 31 durch Lot 34 angelötet werden.

Falls eine Temperaturerhöhung im Bereich der elektrischen Heizeinrichtung 4, beispielsweise durch einen Kurzschluß, auftritt und die Lötstelle 30 und/oder 31 stark erhitzt wird, schmilzt das Lot 34 und der entsprechende, unter mechanischer Vorspannung stehende Metalldraht 11 oder 26 bewegt sich von der Lötstelle 30 oder 31 nach oben in seine Ausgangsstellung weg, so daß die Stromzuführung zu der elektrischen Heizeinrichtung 4 unterbrochen wird. Die beiden Metalldrähte 11, 26 können auch in Form von flachen Leitern gebildet werden, wie beispielsweise entsprechend der Stromleiter 18, 19, die den Netzanschluß bilden. Insbesondere der Stromleiter 19 stabilisiert den Metalldraht 26 in seiner räumlichen Orientierung aufgrund der Halterung an der Anschlußstelle 21 und der Lötstelle 31.

Alle Stromleiter 12, 15, 18 und 19 können aus einem Blech gestanzt werden, zunächst mit in den Figuren nicht näher dargestellten, dünnen Verbindungsstegen verbunden sein, die nach Befestigung der Stromleiter 12, 15, 18, 19 an dem Gehäuse 17 des Netzschalters 14 und den weiteren Kontakt- und Anschlußstellen durchtrennt werden.

Vorzugsweise sind die Stromleiter 12, 15 , 18 und 19 aus Kupfer oder Stahl hergestellt, während die Stromleiter oder Drähte 11, 26 aus einer CuCoBe-Legierung gefertigt sind, um ihnen neben einer guten Stromleitung auch eine federnde Eigenschaft zu verleihen.

Wie anhand der Figuren gut zu erkennen ist, kann dieser Durchlauferhitzer als selbsttragendes Teil zusammen mit dem Netzschalter 14 in ein Gehäuse eingesetzt werden, ohne daß dazu zusätzliche Verbindungen, beispielsweise in Form von Drähten, erforderlich sind und ohne daß der Netzschalter 14 gesondert ausgerichtet werden müßte. In dem eingebauten Zustand wird dann der Netzschalter 14 an seinem Gehäuse 17 in einer entsprechenden Aufnahme des Gerätegehäuses gehalten, so daß eine stabile Anordnung zwischen dem Netzschalter 14, den Stromleitern 12, 15, 18, 19, 11, 26 und der Heizeinrichtung 4 sowie dem Temperaturregler 9 gegeben ist. Die einzige Verbindung, die nach dem Einbau des Durchlauferhitzers in das Gerätegehäuses erforderlich ist, ist der Anschluß des Netzanschlußkabels (nicht dargestellt) an die Anschlußfahnen 22.

## Patentansprüche

1. Durchlauferhitzer für ein wassererhitzendes Haushaltsgerät, wie eine Kaffee-, Teemaschine oder ein Wasserkocher, mit einem U-förmigen Wasserrohr (1) mit Zu- (2) und Ablauf (3) an seinen freien Enden und mit einer mit dem Wasserrohr (1) in Wärmekontakt stehenden und entlang diesem verlaufenden elektrischen Heizeinrichtung (4) mit elektrischen Anschlußstellen (6, 7) und einem am Durchlauferhitzer befestigten und mit diesem in Wärmekontakt stehenden Temperaturregler (9), der über elektrische Anschlußverbindungen (11, 12) mit einem Anschlußende (6) der Heizeinrichtung (4) und mit dem anderen Anschlußende (7) mit einemNetzschalter (14) verbunden ist, der wiederum seinerseits über einen Stromleiter (18) mit einer elektrischen Netzspannungsquelle einerseits und über einen weiteren Stromleiter (19) mit der Anschlußstelle (7) verbunden ist,
**dadurch gekennzeichnet,**
daß zumindest eine der vom Durchlauferhitzer getragenen elektrischen Anschlußverbindungen (12, 15, 19) den Netzschalter (14) trägt, daß diese Anschlußverbindung (12, 15, 19) durch einen selbsttragenden Stromleiter gebildet ist und daß der Netzschalter (14) auf der Krümmungsaußenseite des Wasserrohrs (1) freitragend durch den Stromleiter (12, 15, 19) gehalten ist.

2. Durchlauferhitzer nach Anspruch 1,
**dadurch gekennzeichnet,**
daß drei Stromleiter (12, 15, 19) vorgesehen sind, die den Netzschalter (14) tragen.

3. Durchlauferhitzer nach Anspruch 2,
**dadurch gekennzeichnet,**
daß die Netzanschluß-Stromleiter (12, 15, 18, 19), in Projektion auf das Wasserrohr (1) gesehen, nebeneinanderliegend etwa in der Mitte (5) des U-förmigen Wasserrohrs (1) verlaufen.

4. Durchlauferhitzer nach Anspruch 2,
**dadurch gekennzeichnet,**
daß die Netzanschluß-Stromleiter (18, 19) das Wasserrohr (1) mit Abstand freitragend überspannen und daß der Netzschalter (14) zwischen dem Temperaturregler (9) und der einen Anschlußstelle (7) der Heizeinrichtung (4) angeordnet ist.

5. Durchlauferhitzer nach Anspruch 1,
**dadurch gekennzeichnet,**
daß alle elektrischen Anschlußverbindungen als selbsttragende Stromleiter (12, 15, 18, 19) ausgebildet sind.

6. Durchlauferhitzer nach Anspruch 1,
**dadurch gekennzeichnet**.
daß der Netzschalter (14) etwa in der Mitte der Krümmungsaußenseite des Wasserrohrs (1) gehalten ist.

7. Durchlauferhitzer nach Anspruch 1,
**dadurch gekennzeichnet,**
daß der Temperaturregler (9) mittels Träger (8) mit dem Wasserrohr (1) in gutem Wärmekontakt steht, wobei der Temperaturregler (9) mit dem sich zu dem Netzschalter (14) erstreckenden Stromleiter (12) die wesentliche Halterung für den Netzschalter (14) bildet.

8. Durchlauferhitzer nach Anspruch 1,
**dadurch gekennzeichnet,**
daß der Temperaturregler (9) auf der Krümmungsinnenseite des Wasserrohrs (1) angeordnet ist.

9. Durchlauferhitzer nach Anspruch 1,
**dadurch gekennzeichnet,**
daß an dem Träger (8) des Temperaturreglers (9) ein elektrischer Widerstand (10) gehalten und zu dem Temperaturregler (9) parallel geschaltet ist, wobei sich ein Stromleiter (15) für die elektrische Verbindung von dem Widerstand (10) zu dem Netzschalter (14) erstreckt.

10. Durchlauferhitzer nach Anspruch 2,
**dadurch gekennzeichnet,**
daß alle Stromleiter (12, 15, 18, 19), die sich zu dem Netzschalter (14) erstrecken, im Bereich der Außenseite des Wasserrohrs (1) etwa parallel zueinander verlaufen.

11. Durchlauferhitzer nach Anspruch 1,
**dadurch gekennzeichnet,**
daß alle Stromleiter (12, 15, 18, 19), die sich zu dem Netzschalter (14) erstrecken, im Bereich der Außenseite des Wasserrohrs (1) etwa in einer Ebene liegend verlaufen.

12. Durchlauferhitzer nach Anspruch 3,
**dadurch gekennzeichnet,**
daß die freien Endabschnitt der Netzanschluß-Stromleiter (18, 19) in einer Ebene, die durch das Wasserrohr (1) gebildet wird, liegend verlaufen.

13. Durchlauferhitzer nach Anspruch 1,
**dadurch gekennzeichnet,**
daß der eine und/oder der andere Stromleiter (11, 26) zwischen dem einen und/oder dem anderen Anschlußende (6, 7) der elektrischen Heizeinrichtung (4) und dem Netzschalter (14) und/oder dem Temperaturregler (9) unter mechanischer Vorspannung stehend befestigt ist (sind), wobei mindestens eine Befestigungsstelle (30, 31) durch eine Löststelle (30, 31) gebildet ist, und daß sich der Stromleiter (11, 26) unter einem Lösen der Lötstelle (30, 31) bei Überhitzung aufgrund der Vorspannung von dem Anschlußpunkt (30, 31) wegbewegt und dadurch eine Unterbrechung der Stromleitung zwischen dem Anschlußpunkt (30, 31) und dem Stromleiter (11, 26) bewirkt wird.

14. Durchlauferhitzer nach Anspruch 13,
**dadurch gekennzeichnet,**
daß der Stromleiter (11, 26) mindestens einen verformten Abschnitt (27) aufweist, der federnd nachgiebig eine Abstandsänderung zwischen der Lötstelle (30, 31)und dem zugehörigen Metalldraht (11, 26) aufnimmt, wenn das Lot (34) schmilzt.

15. Durchlauferhitzer nach Anspruch 14,
**dadurch gekennzeichnet,**
daß der verformte Abschnitt (27) U- oder halbkreisförmig geformt ist.

16. Durchlauferhitzer nach Anspruch 14,
**dadurch gekennzeichnet,**
daß der verformte Abschnitt W- oder zickzackförmig geformt ist.
